# FASCICULE DE BREVET EUROPEEN

(11) **EP 2 427 372 B1**
(45) Date de publication et mention de la délivrance du brevet: **30.10.2013**
(21) Numéro de dépôt: 10727087.8
(22) Date de dépôt: 03.05.2010
(51) Int. Cl.: B64C 11/46, B64D 15/04

(54) **DISPOSITIF DE DÉGIVRAGE POUR PALES DE PROPULSEUR DE TYPE PROPFAN**
ENTEISUNGSSYSTEM FÜR DIE PROPELLERBLÄTTER EINES PROPFAN-TRIEBWERKS
PROPFAN BLADE DEICING SYSTEM

(30) Priorité: 05.05.2009 FR 0952967
(43) Date de publication de la demande: 14.03.2012
(73) Titulaire: Airbus Operations (S.A.S.), 31060 Toulouse (FR)
(72) Inventeur: BULIN, Guillaume, 31700 Blagnac (FR); ROGERO, Jean-Michel, 31300 Toulouse (FR); FABRE, Christian, 31170 Tournefeuille (FR)
(74) Mandataire: Cornuejols, Christophe
(86) Numéro de dépôt international: PCT/FR2010/050842
(87) Numéro de publication internationale: WO 2010/128240

(56) Documents cités:
- DE-C1- 3 828 834
- FR-A- 2 645 499
- US-A- 2 440 115
- US-A- 2 586 054

## Description

La présente invention relève du domaine des équipements aéronautiques. Elle concerne plus spécifiquement les dispositifs de dégivrage. Dans le cas présent, elle vise en particulier le problème du dégivrage de pales d'hélices.

Lors des différentes phases de vol, et en particulier au sol, au décollage, en montée, ou à l'atterrissage, les aéronefs sont régulièrement soumis à des conditions atmosphériques givrantes (surface froide + humidité ambiante), qui amènent la création de dépôts de glace sur diverses parties de l'aéronef. Ces dépôts de glace modifient les performances aérodynamiques de l'appareil, augmentent sa masse et réduisent sa manoeuvrabilité.

Divers dispositifs d'anti-givrage (empêchant la glace de se former sur une surface de l'appareil) ou de dégivrage (décoller les morceaux de glace une fois celle-ci formée) ont été développés depuis des décennies, et sont déjà connus de l'homme de l'art. Ils utilisent par exemple pour les bords d'attaque des voilures des résistances chauffantes provoquant la fonte de la glace et sa rupture en morceaux entraînés par le flux d'air. De même sont utilisées des membranes gonflables par intermittence pour briser la glace en cours de formation.

Il est évident que des problèmes analogues de lutte contre le givrage, par anti-givrage ou dé-givrage, se posent pour les pales des hélices dans le cas d'avions propulsés par hélices.

Par ailleurs, lorsque des blocs de glace viennent à se décrocher de ces hélices, ils sont alors dotés d'une énergie cinétique considérable, et risquent de venir endommager le reste de l'appareil, par exemple le fuselage, lequel présente une résistance modérée à l'impact.

Dans ce cas, des résistances chauffantes sont généralement utilisées, avec un générateur électrique installé dans l'axe de l'hélice et un transfert de courant vers des câbles passant à travers cet axe vers les différentes pales. Le dégivrage des pales est le plus souvent cyclique, pour réduire la puissance électrique utilisée.

On utilise alors fréquemment des dispositifs de contacts tournants assurant une transmission d'énergie électrique entre deux parties, mobiles l'une par rapport à l'autre, par utilisation de balais électro-conducteurs fixés sur une partie fixe et qui viennent glisser sur une piste, par exemple annulaire, de la partie tournante

Dans le cas des propulseurs du type connu sous le nom générique de «propfan», comportant deux hélices contrarotatives à rotor ouvert (non caréné), entraînées par une boite de vitesse différentielle, elle même mue par une turbomachine, les hélices sont disposées de façon annulaire autour du coeur de cette turbomachine, et cette disposition empêche en pratique l'utilisation des dispositifs précédemment cités.

Un des inconvénients principaux de ces systèmes à contacts tournants est en effet lié à la vitesse relative des balais par rapport à la piste mobile, cette vitesse étant naturellement fonction du diamètre de la piste annulaire et de la vitesse de rotation de cette partie.

Il s'ensuit pour tous ces systèmes à contacts tournants une usure rapide des balais, qui entraîne une réduction de leurs performances et un besoin de maintenance régulière et coûteuse. L'absence de lubrification de ces balais (pour des raisons de complexité) contribue également à réduire significativement cette durée de vie.

Dans le cas de l'hélice frontale d'un «propfan», le diamètre du coeur de la turbomachine amène une vitesse relative de la partie mobile par rapport à la partie statique de l'ordre de quatre cents mètres par seconde, ce qui rend les systèmes à balais et piste mobile inutilisables en pratique, car dépassant les spécifications des dispositifs disponibles dans le commerce.

La situation est encore aggravée dans le cas de «propfan» par le caractère contrarotatif des deux hélices, qui se traduit par une vitesse relative de huit cent mètres par seconde entre elles, à l'endroit où devrait être installé un dispositif de balais et pistes conducteurs.

La demande de brevet français FR2645499, déposée le 28 Novembre 1989 par la Société General Electric Company, décrit un moyen de carénage particulier d'une turbomachine d'un turbopropulseur d'aéronef comportant des pales contre rotatives montées sur leurs turbines respectives par l'intermédiaire de couronnes annulaires. La configuration de ce moyen de carénage permet d'assurer une ventilation efficace de l'espace enfermé par celui-ci. En revanche il ne décrit, ni ne suggère un quelconque moyen permettant de réaliser le dégivrage des pales constituant le rotor d'un tel propulseur.

La demande de brevet allemand DE3828834, déposée le 28 Août 1988 par la société allemande MTU, décrit, quant à elle, un turbopropulseur comportant une soufflante auxiliaire utilisée pour forcer une circulation d'air frais sur le radiateur de refroidissement du réducteur qui entraine les pales de la soufflante principale. Ce document décrit ainsi un dispositif permettant avantageusement, par circulation d'air frais forcée, d'éviter un échauffement excessif du réducteur. Il ne décrit ni ne suggère, en revanche, de solution permettant d'assurer le dégivrage (réchauffage) des pales de la soufflante principale en cas de givre.

L'objectif de la présente invention est alors de proposer un dispositif de dégivrage / antigivrage de pales de propulseur de type «propfan», qui évite les inconvénients pré-cités.

A cet effet, l'invention vise un rotor pour propulseur d'aéronef de type dit "propfan", ledit rotor comprenant une pluralité de pales disposées autour d'une couronne annulaire mobile en rotation avec ces pales et venant former par sa paroi externe une partie de l'enveloppe externe du propulseur, ledit rotor étant entrainé en rotation par une turbomachine générant un flux de gaz chauds s'échappant par une veine sensiblement annulaire, délimitée sur une partie de sa longueur par la paroi interne de ladite couronne annulaire mobile, le rotor comportant
un dispositif de dégivrage comportant lui-même :
- des moyens de captation de l'énergie thermique de la veine chaude agencés au sein de la couronne annulaire mobile,
- des moyens de transfert de l'énergie thermique captée par les moyens de captation vers chacune des pales du rotor,
- des moyens de répartition de l'énergie thermique sur une partie au moins de la surface de chacune des pales, lesdits moyens de répartition étant alimentés en énergie thermique par les moyens de transfert.

Selon diverses dispositions éventuellement utilisées en conjonction,
- les moyens de captation de l'énergie thermique comprennent au moins un point de prélèvement d'air chaud au niveau de la veine chaude annulaire.
- les moyens de transfert de l'énergie thermique vers les pales du rotor sont adaptés à tenir compte de la rotation de la pale autour de son axe longitudinal lors des modifications de calage de celle-ci.
- les moyens de répartition de l'énergie thermique comprennent un conduit de distribution d'air chaud alimentant une série d'éjecteurs d'air chaud disposés sur une partie au moins de la surface de la pale.

Selon cette dernière disposition, dans le but de découper la glace en morceaux de taille maximale prédéterminée, une partie au moins des éjecteurs d'air chaud sont localisés le long du bord d'attaque, ainsi que, de chaque côté de la pale, selon un ensemble de segments
s'étendant à partir du bord d'attaque sur une partie de la largeur de la pale,
préférablement parallèles,
et distant les uns des autres de distances prédéterminées.

Dans ce cas, préférentiellement, chaque segment est sensiblement perpendiculaire à la tangente locale du bord d'attaque de la pale.

Toujours dans ce cas, sur chaque segment et sur le bord d'attaque de la pale, des éjecteurs sont ménagés dans la surface de la partie avant de la pale à intervalles réguliers.

Selon un mode de réalisation avantageux, le dispositif comporte également au moins un point de prélèvement d'air froid, et des moyens de mitigation de l'air chaud et de l'air froid pour obtenir une température conforme à une plage prédéterminée.

Pour tenir compte de la nature des gaz circulant dans la veine d'air chaud, le dispositif peut avantageusement comporter un filtre à impuretés en aval du point de prélèvement d'air chaud.

L'invention vise également un dispositif de dégivrage de rotor de propulseur, comportant, pour chaque pale, un dispositif de dégivrage tel qu'exposé ci-dessus.

L'invention vise sous un autre aspect un aéronef comportant au moins un dispositif tel qu'exposé.

La description qui va suivre, donnée uniquement à titre d'exemple d'un mode de réalisation de l'invention, est faite en se référant aux figures annexées dans lesquelles :
la figure 1 montre un propulseur de type «propfan», auquel l'invention peut être appliquée,
la figure 2 illustre en vue en coupe très schématisée d'un tel propulseur,
la figure 3 est une illustration schématique des éléments principaux composant le dispositif selon l'invention,
la figure 4 illustre schématiquement une section de pale de rotor,
la figure 5 illustre une variante du dispositif de dégivrage selon l'invention.

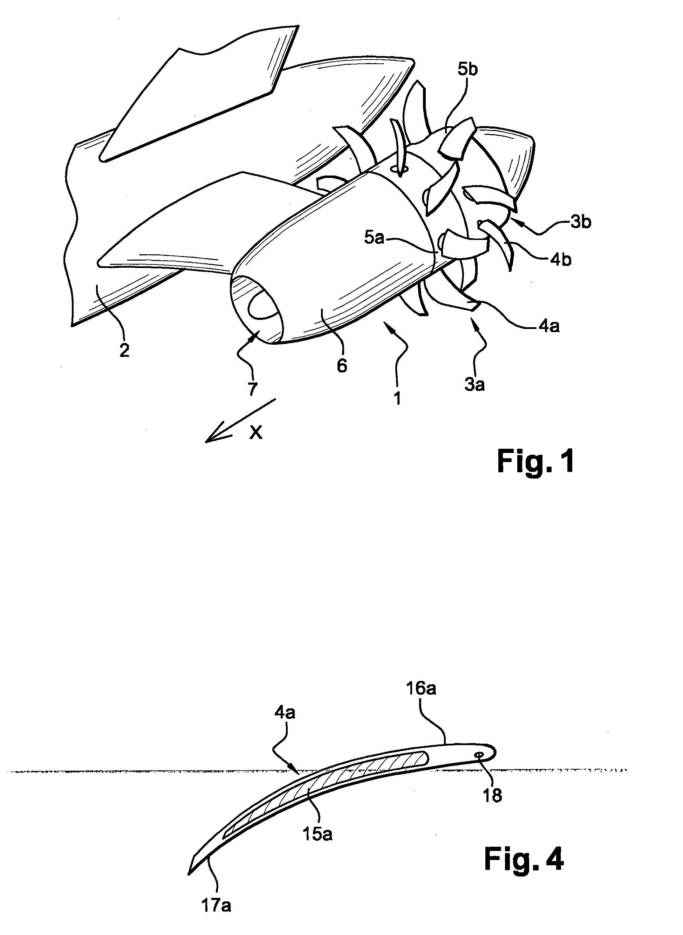

L'invention est destinée à être utilisée dans un propulseur 1 d'avion, par exemple de type dit "propfan", tel qu'illustré figure 1. De tels propulseurs sont envisagés pour des aéronefs futurs. Dans l'exemple de mise en oeuvre illustré ici, deux propulseurs «propfan» 1 sont fixés, par des mats de support, de part et d'autre de la partie arrière du fuselage 2 d'un aéronef.

Chaque propulseur «propfan» 1 comporte ici deux rotors contrarotatifs 3a, 3b comportant chacun un ensemble de pales 4a, 4b équidistantes, et disposés en partie arrière du propulseur 1. Les pales 4a, 4b de chaque rotor 3a, 3b font saillie d'une couronne annulaire 5a, 5b mobile avec ce rotor, dont la surface externe se place dans la continuité de l'enveloppe extérieure 6 du propulseur.

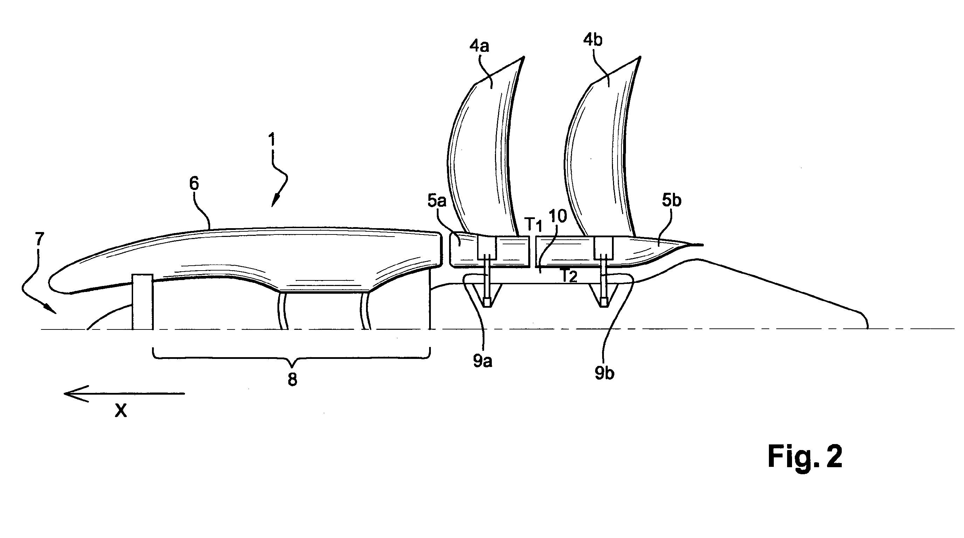

Comme on le voit sur la figure 2 de façon schématique, le propulseur «propfan» 1 comporte une entrée d'air 7 qui alimente une turbomachine 8. Cette turbomachine 8 comporte une partie axiale entraînée en rotation lorsque la turbomachine est en fonctionnement. Cet axe entraîne à son tour, par l'intermédiaire de transmissions mécaniques non illustrées figure 2, les axes 9a, 9b des pales 4a, 4b des deux rotors contrarotatifs 3a, 3b.

Les gaz chauds générés par la turbomachine 8 lors de son fonctionnement sont évacués par une veine chaude annulaire 10 dont la sortie est située à l'arrière des deux rotors 3a, 3b.

Les détails de réalisation des «propfan» et de leurs composants : rotors, turbomachine, transmission, ainsi que leurs dimensions, matériaux etc. sortent du cadre de la présente invention. Les éléments décrits ici ne sont donc donnés qu'à titre informatif facilitant la compréhension de l'invention dans un de ses exemples, nullement limitatif, de mise en oeuvre.

Ainsi qu'il ressort de la description précédente, lors du vol de l'aéronef, l'air extérieur, dont la température est comprise entre +15°C à proximité du sol et -50°C en altitude, vient circuler le long des couronnes annulaires 5a, 5b des hélices, sensiblement selon la direction opposée à l'axe longitudinal X de déplacement de l'aéronef.

Dans le même temps, les gaz circulant dans la veine chaude annulaire 10 ont une température usuellement comprise entre 600 et 800°C.

Le dispositif de dégivrage selon l'invention tire parti de cette température existante au sein de la veine chaude 10 pour réchauffer une partie au moins de la surface des pales des rotors, mais surtout découper l'éventuel dépôt de glace en segments possédant une énergie cinétique suffisamment faible pour ne pas endommager l'aéronef

Le propulseur génère en effet au moins 200 kW de puissance thermique évacuée par la veine chaude annulaire 10. Dans cette veine chaude 10, la pression est de l'ordre de 0.5 à 1 bar relatif.

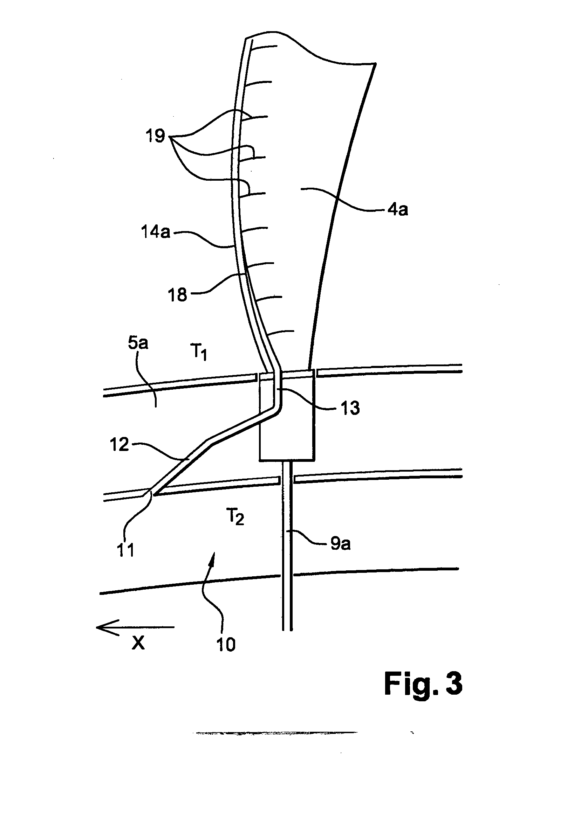

Le dispositif de dégivrage de pales de rotor selon l'invention (figure 3) est ici décrit pour le rotor avant 3a du propulseur envisagé. Un dispositif identique est envisagé pour le rotor arrière 3b.

Le dispositif comporte en premier lieu, pour une ou plusieurs pales 4a du rotor 3a, un point de prélèvement d'air chaud 11 au niveau de la veine chaude annulaire 10. Avec un minimum de un par rotor. Dans l'exemple décrit ici, ce point de prélèvement d'air chaud 11 est situé légèrement en amont de la pale 4a.

Il est à noter pour la suite de la description que chaque pale 4a est reliée à un dispositif de dégivrage sensiblement similaire.

Ces points de prélèvement d'air 11 sont donc disposés angulairement de façon régulière (par exemple tous les 30° pour un rotor comprenant douze pales) sur la surface interne de la couronne annulaire 5a. Ils sont de type connu de l'homme de l'art et par exemple d'un diamètre de 10mm de manière à fournir un débit maximum d'environ 0.05kg/s fonction également du nombre et du diamètre des éjecteurs placés sur la pale reliée..

L'air prélevé au point de prélèvement 11 est canalisé par un conduit 12 vers l'axe 9a de la pale 4a. Ce conduit 12 est préférablement flexible sur une partie au moins de sa longueur, de manière à pouvoir s'adapter au déplacement angulaire de la pale 4a autour de l'axe 9a, lorsque son calage est modifié. Ce conduit 12 peut être par exemple constitué (en partie du moins) d'un tuyau métallique résistant aux hautes températures. Alternativement lorsque cela est possible le conduit peut être introduit au niveau du centre de rotation de l'axe de la palle, et disposer d'une jonction permettant la rotation sur le débattement du pas de la palle.

Le conduit 12 se poursuit au sein de l'axe 9a de la pale 4a par un canal 13, préférablement enrobé d'isolant thermique, qui aboutit au pied du bord d'attaque 14a de la pale.

Comme on le voit figure 4, la pale 4a comporte, dans le présent exemple nullement limitatif, une âme 15a en matériau composite, du type à résine thermoplastique ou thermodurcissable, ainsi qu'une partie avant 16a rapportée en alliage métallique (par exemple en alliage de titane), et un bord de fuite 17a également rapportée sous forme de pièce métallique.

Le canal 13 se prolonge par un conduit distributeur 18, disposé dans la partie avant 16a de la pale 4a, et qui suit sensiblement la forme du bord d'attaque 14a de ladite pale.

Ce conduit distributeur 18 alimente une série d'éjecteurs d'air chaud (non détaillés sur les figures), localisés le long du bord d'attaque 14a, ainsi que, de chaque côté de la pale 4a, selon un ensemble de segments 19 préférablement parallèles et équidistant de cinq à dix centimètres les uns des autres, chacun des segments s'étendant à partir du bord d'attaque et étant d'une longueur de cinq à quinze centimètres, n'excédant pas de toute façon la largeur de la partie avant 16a de la pale, du fait des températures limitées supportées par les matériaux composites de l'âme 15a de la pale 4a, si toutefois la pale est réalisée en matériau composite.

Chaque segment 19 est dans le présent exemple sensiblement perpendiculaire à la tangente locale du bord d'attaque 14a de la pale.

Sur chaque segment 19 et sur le bord d'attaque 14a, des éjecteurs sont ménagés dans la surface de la partie avant 16a de la pale à intervalles réguliers, par exemple de deux centimètres. Chacun de ces éjecteurs à un diamètre de un ou deux millimètres.

Lors de la mise en marche des propulseurs 1, la veine d'air chaud 10 se remplit immédiatement d'air chaud (en fait d'air et de gaz brûlés) sous une pression de 0.5 à 1 bar relatif et une température de 600 °C environ.

Dès cet instant, de l'air prélevé, pour chaque pale 4a, par les points de prélèvement 11 circule dans les tubes 12, 13, 18, et alimente les éjecteurs le long des lignes de bord d'attaque et des segments 19, rendant localement impossible la formation de givre. Il s'agit alors d'une fonction d'anti-givrage local.

Lors du vol de l'avion, l'air éjecté par les éjecteurs vient former un film d'air chaud qui suit la couche limite locale sur la pale.

Le dispositif peut, soit, rester en fonctionnement en permanence, indépendamment des conditions atmosphériques ou de la phase de vol en cours, soit, être muni d'un système de vanne permettant de stopper les prélèvements d'air et par conséquent permettant au pilote de contrôler le fonctionnement du système.

En cas de conditions givrantes, le givre éventuel ne peut pas se former sur le bord d'attaque 14a, ni sur les segments 19. La glace ne peut donc se former que sur une surface limitée, déterminée par la distance entre les segments 19, typiquement cinq à dix centimètres. La masse de glace susceptible de s'accumuler sur la pale est également réduite.

Par ailleurs, les blocs de glace ainsi segmentés ont spontanément tendance à être chassés sous l'effet du flux d'air et de la force centrifuge exercée par le mouvement de la pale 4a. Leurs dimensions limitées réduisent leur énergie cinétique ainsi que les risques de dégâts créés par ces blocs dans le cas ou suite à leur détachement ils viendraient à heurter le fuselage de l'avion.

Il ressort de la description que le dispositif de dégivrage selon l'invention permet de s'affranchir des problèmes que pose typiquement un dispositif électrique requérant des contacts tournants rapides tels qu'utilisés dans l'art antérieur. La maintenance du mécanisme de dégivrage des pales s'en trouve facilitée.

Le présent dispositif utilise une ressource énergétique majoritairement perdue en tirant parti de la chaleur, dégagée par le propulseur, qui vient passer sous la couronne annulaire 5a du rotor.

Le débit nécessaire pour le dégivrage des pales 4a, de l'ordre de 0.05kg/s par ensemble propulsif, reste très faible au regard du volume d'air qui circule dans la veine d'air chaud 10.

La portée de la présente invention ne se limite pas aux détails des formes de réalisation ci-dessus considérées à titre d'exemple, mais s'étend au contraire aux modifications à la portée de l'homme de l'art.

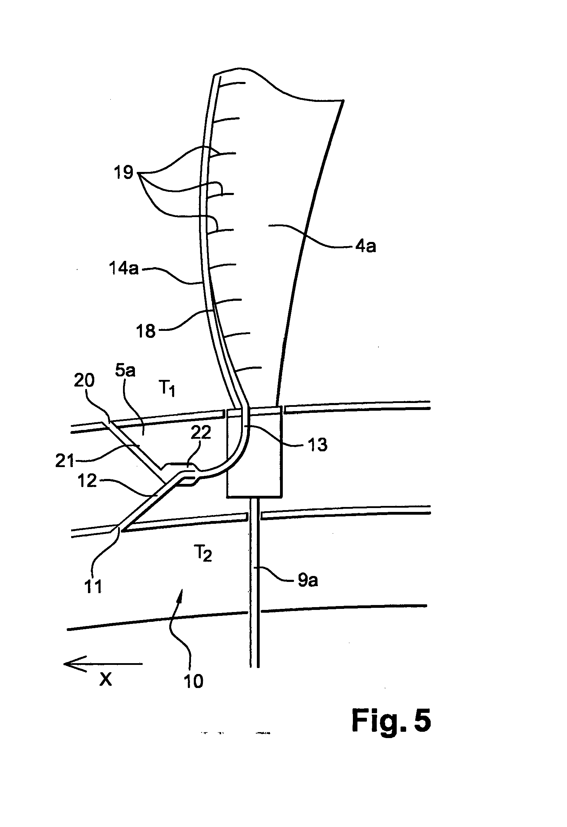

Dans une variante de réalisation, illustrée par la figure 5, le dispositif comporte également, pour chaque pale 4a, un point de prélèvement d'air froid 20, au niveau de la surface extérieure de la couronne annulaire 5a. L'air est ensuite canalisé par un tube 21 vers une pompe dite jet-pump 22, de type connu en soi, dans laquelle le flux d'air chaud venant du point de prélèvement d'air chaud 11 à pression élevée (six à huit bars), provoque une aspiration d'air froid venant du point de prélèvement d'air froid 20.

De cette manière, en fonction des dimensionnement des points de prélèvements et du dispositif jet pump, il est possible d'assurer un mixage connu des volumes d'air chaud et d'air froid, de façon à dégivrer les pales avec un air ne dépassant pas un niveau maximal, par exemple de 200°C, acceptable pour les matériaux constituant les pales, en particulier lorsque ces pales sont réalisées en matériaux composites.

Dans cette variante, le point de prélèvement d'air froid 20 peut également être dégivré par une dérivation créée sur le tube 12, de manière à maintenir en permanence l'arrivée d'air froid opérationnelle.

Préférentiellement, dans cette variante, les volumes d'air chaud et d'air froid mélangés par la pompe jet-pump 22 sont régulés par un organe limitateur de débit piloté par une électronique de contrôle, selon les températures mesurées dans la veine chaude, l'air extérieur et l'air circulant dans le conduit distributeur 18.

Alternativement, cette régulation de température peut être effectuée de manière non piloté en utilisant un système thermo-mécanique dans le flux d'air mitigé et dont la déformation selon la température permet de réguler les arrivées d'air. Ce dispositif évite d'avoir à prévoir une source d'énergie électrique dans le rotor.

La description a été faite en considérant que chaque pale était dotée d'un dispositif identique et indépendant de dégivrage. Il est clair cependant qu'il est également possible de choisir un dispositif dans lequel un nombre plus réduit de points de prélèvement d'air chaud (et éventuellement d'air froid) alimentent l'ensemble des pales (éventuellement via une ou plusieurs pompes jet-pump) pour leur dégivrage.

De nombreuses variantes de disposition des lignes d'éjecteurs d'air chaud sont naturellement envisageables, par exemple en utilisant deux lignes d'éjecteurs d'air chaud de part et d'autre du bord d'attaque, au lieu d'une ligne sur le bord d'attaque lui-même, ou en modifiant la forme ou l'orientation des segments 19 par rapport à la ligne du bord d'attaque 14a.

Il est clair que la zone du pied de pale est celle où il est le plus souhaitable d'éviter la formation de glace, car les blocs de glace issus de cette zone acquièrent une énergie cinétique maximale du fait de l'effet de fronde lors de leur détachement de la pale. Il est alors envisageable de rapprocher les segments 19 dans cette zone de pied de pale, ou d'augmenter le diamètre et donc le débit d'air chaud issu des éjecteurs situés sur ces segments.

De la même manière, pour éviter les pertes de charges réduisant le débit vers le bout de la pale, le dispositif peut comporter plusieurs conduits distributeurs 18 parallèles, issus du bout du canal 13, et alimentant chacun une série de segments d'éjecteurs.

Dans une autre variante, pour tenir compte du contenu d'impuretés (produits de combustion, carburant non brûlé etc.) de l'air issu du point de prélèvement 11 sur la veine d'air chaud 10, le dispositif comporte un filtre de type connu sur le conduit 12.

## Revendications

1. Rotor (3a, 3b) pour propulseur d'aéronef (1) de type dit "propfan", ledit rotor (3a) comprenant une pluralité de pales (4a) disposées autour d'une couronne annulaire (5a) mobile en rotation avec ces pales et venant former par sa paroi externe (14a) une partie de l'enveloppe externe du propulseur, ledit rotor étant entrainé en rotation par une turbomachine (8) générant un flux de gaz chauds s'échappant par une veine sensiblement annulaire (10), délimitée sur une partie de sa longueur par la paroi interne (15a) de ladite couronne annulaire mobile (5a),
caractérisé en qu'il comporte un dispositif de dégivrage comportant lui-même :
- des moyens de captation (11) de l'énergie thermique de la veine chaude (10) agencés au sein de la couronne annulaire mobile (5a),
- des moyens de transfert (12, 13) de l'énergie thermique captée par les moyens de captation (11) vers chacune des pales (4a) du rotor,
- des moyens de répartition (18, 19) de l'énergie thermique sur une partie au moins de la surface de chacune des pales (4a), lesdits moyens de répartition (18, 19) étant alimentés en énergie thermique par les moyens de transfert (12, 13).

2. Rotor selon la revendication 1, **caractérisé en ce que** les moyens de captation (11) de l'énergie thermique comprennent au moins un point de prélèvement d'air chaud (11) au niveau de la veine chaude annulaire (10).

3. Rotor selon l'une quelconque des revendications précédentes, **caractérisé en ce que** les moyens de transfert (12, 13) de l'énergie thermique vers une pale donnée (4a) du rotor sont adaptés à tenir compte de la rotation de la pale autour de son axe longitudinal (9a) lors des modifications de calage de celle-ci.

4. Rotor selon l'une quelconque des revendications précédentes, **caractérisé en ce que** les moyens de répartition (18, 19) de l'énergie thermique sur une pale donnée comprennent un conduit de distribution d'air chaud (18) alimentant une série d'éjecteurs d'air chaud disposés sur une partie au moins de la surface de la pale (4a).

5. Rotor selon la revendication 4, **caractérisé en ce que** une partie au moins des éjecteurs d'air chaud sont localisés le long du bord d'attaque (14a), ainsi que, de chaque côté de la pale (4a), selon un ensemble de segments (19) s'étendant à partir du bord d'attaque sur une partie de la largeur de la pale, lesdits segments, préférablement parallèles, étant distants les uns des autres de distances prédéterminées.

6. Rotor selon la revendication 5, **caractérisé en ce que** chaque segment (9) est sensiblement perpendiculaire à la tangente locale du bord d'attaque (14a) de la pale.

7. Rotor selon l'une quelconque des revendications 5 à 6, **caractérisé en ce que** sur chaque segment (19) et sur le bord d'attaque (14a) de la pale (4a), des éjecteurs sont ménagés dans la surface de la partie avant (16a) de la pale à intervalles réguliers.

8. Rotor selon l'une quelconque des revendications 2 à 7, **caractérisé en ce qu'**il comporte également, au moins un point de prélèvement d'air froid (20), et des moyens de mitigation (22) de l'air chaud et de l'air froid pour obtenir une température conforme à une plage prédéterminée.

9. Turbopropulseur de type « Propfan » (1), **caractérisé en ce que en ce qu'**il comporte au moins un rotor selon l'une quelconque des revendications précédentes

10. Aéronef comportant au moins un turbopropulseur selon la revendication 9.

## Patentansprüche

1. Rotor (3a, 3b) für ein Luftfahrzeug-Triebwerk (1) vom so genannten "Propfan"-Typ, wobei der Rotor (3a) eine Vielzahl von Blättern (4a) enthält, die um einen ringförmigen Kranz (5a) herum angeordnet sind, der mit diesen Blättern drehbeweglich ist und durch seine Außenwand (14a) einen Teil der Außenwand des Triebwerks formt, wobei der Rotor von einer Turbomaschine (8) in Drehung versetzt wird, die einen Fluss warmer Gase erzeugt, der durch einen im Wesentlichen ringförmigen Strom (10) austritt, welcher über einen Teil seiner Länge von der Innenwand (15a) des beweglichen ringförmigen Kranzes (5a) begrenzt wird,
**dadurch gekennzeichnet, dass** er eine Enteisungsvorrichtung aufweist, die selbst aufweist:
- Einrichtungen (11) zum Auffangen der thermischen Energie des warmen Stroms (10), die innerhalb des beweglichen ringförmigen Kranzes (5a) angeordnet sind,
- Einrichtungen (12, 13) zur Übertragung der von den Auffangeinrichtungen (11) aufgefangenen thermischen Energie zu jedem der Blätter (4a) des Rotors,
- Einrichtungen (18, 19) zur Verteilung der thermischen Energie über mindestens einen Teil der Fläche jedes der Blätter (4a), wobei die Verteilungseinrichtungen (18, 19) von den Übertragungseinrichtungen (12, 13) mit thermischer Energie gespeist werden.

2. Rotor nach Anspruch 1, **dadurch gekennzeichnet, dass** die Einrichtungen (11) zum Auffangen der thermischen Energie mindestens eine Warmluft-Entnahmestelle (11) im Bereich des ringförmigen warmen Stroms (10) enthalten.

3. Rotor nach einem der vorhergehenden Ansprüche, **dadurch gekennzeichnet, dass** die Einrichtungen (12, 13) zur Übertragung der thermischen Energie zu einem gegebenen Blatt (4a) des Rotors die Drehung des Blatts um seine Längsachse (9a) bei Änderungen von dessen Einstellung berücksichtigen angepasst sind.

4. Rotor nach einem der vorhergehenden Ansprüche, **dadurch gekennzeichnet, dass** die Einrichtungen (18, 19) zur Verteilung der thermischen Energie auf einem gegebenen Blatt einen Warmluft-Ausgabekanal (18) enthalten, der eine Reihe von Warmluftdüsen speist, die auf mindestens einem Teil der Fläche des Blatts (4a) angeordnet sind.

5. Rotor nach Anspruch 4, **dadurch gekennzeichnet, dass** mindestens ein Teil der Warmluftdüsen sich entlang der Vorderkante (14a) sowie auf jeder Seite des Blatts (4a) gemäß einer Einheit von Segmenten (19) befindet, die sich ausgehend von der Vorderkante über einen Teil der Breite des Blatts erstrecken, wobei die vorzugsweise parallelen Segmente vorbestimmte Abstände zueinander haben.

6. Rotor nach Anspruch 5, **dadurch gekennzeichnet, dass** jedes Segment (9) im Wesentlichen lotrecht zur lokalen Tangente der Vorderkante (14a) des Blatts ist.

7. Rotor nach einem der Ansprüche 5 bis 6, **dadurch gekennzeichnet, dass** auf jedem Segment (19) und auf der Vorderkante (14a) des Blatts (4a) Düsen in der Fläche des vorderen Bereichs (16a) des Blatts in gleichmäßigen Abständen angeordnet sind.

8. Rotor nach einem der Ansprüche 2 bis 7, **dadurch gekennzeichnet, dass** er ebenfalls mindestens eine Kaltluft-Entnahmestelle (20) und Einrichtungen (22) zur Eingrenzung der Warmluft und der Kaltluft aufweist, um eine einem vorbestimmten Bereich entsprechende Temperatur zu erhalten.

9. Turbotriebwerk vom Typ "Propfan" (1), **dadurch gekennzeichnet, dass** es mindestens einen Rotor nach einem der vorhergehenden Ansprüche aufweist.

10. Luftfahrzeug, das mindestens ein Turbotriebwerk nach Anspruch 9 aufweist.

## Claims

1. Rotor (3a, 3b) for an aircraft propulsion unit (1) of the type known as a "propfan", said rotor (3a) comprising a plurality of blades (4a) disposed around an annular crown (5a) that is able to move in rotation with these blades and forms by way of its outer wall (14a) an outer casing part of the propulsion unit, said rotor being driven in rotation by a turbomachine (8) that generates a flow of hot gases that escape in an approximately annular air flow (10), bounded along a part of its length by the inner wall (15a) of said mobile annular crown (5a),
**characterized in that** it comprises a deicing device, itself comprising:
- means (11) for collecting thermal energy from the hot air flow (10), said means being arranged within the mobile annular crown (5a),
- means (12, 13) for transferring thermal energy collected by the collecting means (11) towards each of the blades (4a) of the rotor,
- means (18, 19) for distributing thermal energy over at least a part of the surface of each of the blades (4a), said distribution means (18, 19) being supplied with thermal energy by the transfer means (12, 13).

2. Rotor according to Claim 1, **characterized in that** the means (11) for collecting thermal energy comprise at least one point (11) for taking hot air in the region of the annular hot air flow (10).

3. Rotor according to either one of the preceding claims, **characterized in that** the means (12, 13) for transferring thermal energy towards a given blade (4a) of the rotor are designed to take into account the rotation of the blade about its longitudinal axis (9a) during setting modifications thereof.

4. Rotor according to any one of the preceding claims, **characterized in that** the means (18, 19) for distributing thermal energy to a given blade comprise a hot air distribution duct (18) supplying a number of hot air ejectors disposed on at least a part of the surface of the blade (4a).

5. Rotor according to Claim 4, **characterized in that** at least some of the hot air ejectors are located along the leading edge (14a), and also, on each side of the blade (4a), along a set of segments (19) that extend from the leading edge over a part of the width of the blade, said segments, which are preferably parallel, being spaced apart from one another by predetermined distances.

6. Rotor according to Claim 5, **characterized in that** each segment (9) is substantially perpendicular to the local tangent of the leading edge (14a) of the blade.

7. Rotor according to either one of Claims 5 and 6, **characterized in that**, on each segment (19) and on the leading edge (14a) of the blade (4a), ejectors are provided at regular intervals within the surface of the front part (16a) of the blade.

8. Rotor according to any one of Claims 2 to 7, **characterized in that** it also comprises at least one point (20) for taking cold air, and means (22) for mitigating hot air and cold air in order to obtain a temperature in accordance with a predetermined range.

9. Turboprop of the "propfan" type (1), **characterized in that** it comprises at least one rotor according to any one of the preceding claims.

10. Aircraft comprising at least one turboprop according to Claim 9.
